Europäisches Patentamt

European Patent Office

Office européen des brevets

(19)

(11) Veröffentlichungsnummer: **0 565 840 A2**

# EUROPÄISCHE PATENTANMELDUNG

(12)

(21) Anmeldenummer: **93103170.2**

(22) Anmeldetag: **27.02.93**

(51) Int. Cl.5: **H02K 19/10**, H02K 1/12

(30) Priorität: **15.04.92 DE 4212547**

(43) Veröffentlichungstag der Anmeldung:
**20.10.93 Patentblatt 93/42**

(84) Benannte Vertragsstaaten:
**DE FR GB IT**

(71) Anmelder: **Licentia Patent-Verwaltungs-GmbH**
**Theodor-Stern-Kai 1**
**D-60596 Frankfurt(DE)**

(72) Erfinder: **Tillner, Siegfried**
**Weissenmoorstrasse 208a**
**W-2900 Oldenburg(DE)**
Erfinder: **Altmann, Manfred**
**Im Schilf 17**
**W-2900 Oldenburg(DE)**

(74) Vertreter: **Vogl, Leo, Dipl.-Ing.**
**Licentia**
**Patent-Verwaltungs-G.m.b.H.**
**Theodor-Stern-Kai 1**
**D-60596 Frankfurt (DE)**

(54) **Relukfanzmotor, insbesondere geschalteter Relukfanzmotor für einen Positionierantrieb.**

(57) Bekannte Reluktanzmotoren weisen aus elektrischen Gründen Statorjoche konstanter Dicke auf, welche durch elektromagnetische Kräfte zwischen den Rotorpolen und den erregten Statorpolen elliptisch verformt werden. Diese Verformungen führen zu Berührungen zwischen dem Rotor und dem Stator und verursachen dadurch Drehmomentschwankungen und Motor- oder Maschinengeräusche. Diese Nachteile werden erfindungsgemäß dadurch beseitigt, daß die Außenkontur (29) des Statorjoches (30) an den durch die elektromagnetischen Kräfte zwischen den Rotorpolen (13, 14, 15, 16) des Rotors (11) und den erregten Statorpolen (45, 46, 47, 48, 49, 50) beaufschlagten biegekritischen Stellen Verstärkungen aufweisen. Hierdurch wird mit einfachsten Mitteln ein geräuscharmer Reluktanzmotor (43) mit einer egalisierten Drehmomentabgabe geschaffen.

FIG.2

Die Erfindung betrifft einen Reluktanzmotor, insbesondere einen geschalteten Reluktanzmotor für einen Positionierantrieb der im Oberbegriff des Patentanspruchs 1 angegebenen Art.

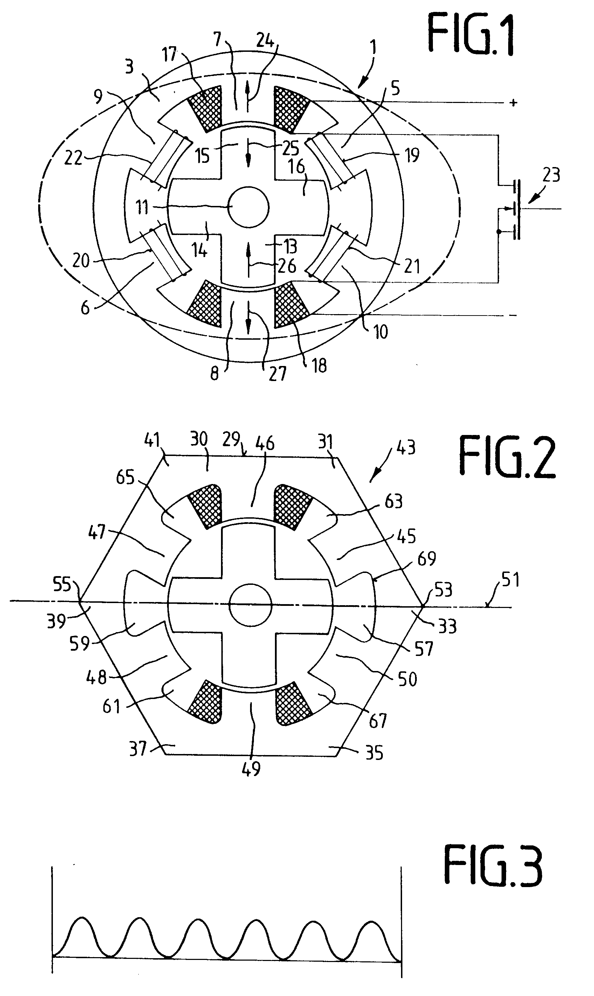

Geschaltete Reluktanzmotoren für Positionierantriebe sind in Kraftfahrzeugen, insbesondere in Gebläsen von Kraftfahrzeugen vorteilhaft einsetzbar, da sie sich durch einen einfachen und robusten Aufbau auszeichnen und außerdem preiswert und wartungsfrei sind. Aus elektrischen Gründen haben die bekannten Reluktanzmotoren einen ringförmigen Statorjoch konstanter Dicke. Aufgrund der elektromagnetischen Kräfte zwischen den Ankerpolen und den erregten Statorpolen kommt es hierbei zu einer umlaufenden elliptischen Verformung des Stators, was in der Figur 1 gestrichelt dargestellt ist. Durch Fortschalten der Statorerregung kommt es gemäß Figur 1 zu einer Verformung an den biegekritischen Stellen, insbesondere zu einer umlaufenden elliptischen Verformung des Stators mit sechs Maxima und sechs Minima entsprechend der Anzahl der sechs in dem Stator vorhandenen Statorpole, siehe Figur 3. Die periodisch auftretenden Verformungen führen zu Drehmomentschwankungen und erzeugen störende Motor- oder Maschinengeräusche.

Der Erfindung liegt die Aufgabe zugrunde, einen Reluktanzmotor, insbesondere einen geschalteten Reluktanzmotor für Positionierantriebe zu schaffen, bei dem keine störenden Drehmomentschwankungen und Geräusche infolge von Statorverformungen mehr auftreten. Diese Aufgabe wird durch die im Patentanspruch 1 gekennzeichneten Merkmale gelöst.

Bei dem erfindungsgemäßen Reluktanzmotor werden die bei den bekannten Motoren auftretenden Statorverformungen auf einfachste Weise minimiert bzw. vermieden. Die Erfindung ermöglicht eine wirksame Reduzierung der Drehmomentschwankungen und der Geräusche durch eine geeignete Ausgestaltung des Stators, insbesondere durch einfache Erhöhungen der Trägheitsmomente an den biegekritischen Stellen.

Die Erfindung wird anhand eines Ausführungsbeispiels im folgenden näher beschrieben. Es zeigen

Figur 1     einen Schnitt durch einen Reluktanzmotor bekannter Art,

Figur 2     einen Schnitt durch den erfindungsgemäßen Reluktanzmotor und

Figur 3     Kennlinien der Ellipsenbildung pro Umdrehung des Rotors bei sechs Statorpolen.

Die Figur 1 betrifft eine Schnittgestaltung eines Reluktanzmotors, insbesondere eines geschalteten Reluktanzmotors 1 für einen Positionierantrieb in Kraftfahrzeugen, wobei das aus lamellierten Blechteilen bestehende Statorjoch 3 ringförmig ausgebildet und eine konstante Dicke aufweist. Dieses Statorjoch 3 weist ausgeprägte und z. B. sechs Statorpole 5/6, 7/8, 9/10 auf. In dem Statorjoch 3 ist in bekannter Weise ein Rotor 11 mit ausgeprägten, lamellierten Rotorpolen 13, 14, 15, 16 drehbar gelagert. Weiterhin sind Magnetfeld erzeugende Spulen 17, 18, 19, 20, 21, 22 auf die Statorpole 5, 6, 7, 8, 9, 10 aufgewickelt, wobei je zwei sich gegenüberliegende Wicklungen 5/6, 7/8 und 9/10 mit einer Gleichspannungsquelle 23 verbunden sind. Hierbei werden die einzelnen Wicklungspaare 17/18, 19/20 und 21/22 zur Erzeugung von den Rotor 11 durchdringenden, veränderbaren Magnetfeldern in Synchronisierung mit den Rotorpositionen sequentiell ein- und ausgeschaltet. Hierbei entstehen elektromagnetische Kräfte zwischen den Rotorpolen 13, 14, 15, 16 und den jeweils erregten Statorpolen 5, 6, 7, 8, 9, 10, die gemäß Figur 1 in den Pfeilrichtungen 24 und 25 bzw. 26 und 27 wirken und zu einer elliptischen Verformung des Stators bzw. des Statorjoches 3 hervorrufen. Diese Verformungen bewirken ein Berühren des Stators mit dem Rotor 11, welcher wiederum zu Drehmomentschwankungen und zu Motor- bzw. Maschinengeräuschen führen. Eine elliptische Verformung ist übertrieben in der Figur 1 gestrichelt dargestellt. Durch Fortschalten der Statorerregung kommt es zu einer umlaufenden elliptischen Verformung des Statorjochs 3 mit sechs Maxima und sechs Minimas entsprechend der Anzahl der Statorpole gemäß Figur 3. Die Nachteile der mit einer Schnittgestaltung nach Figur 1 ausgebildeten Reluktanzmotoren werden dadurch vermieden, daß die Außenkontur 29 des Statorjoches 30 an den durch die elektromagnetischen Kräfte zwischen den Rotorpolen 13, 14, 15, 16 des Rotors 11 und den erregten Statorpolen 45, 46, 47, 48, 49, 50 beaufschlagten biegekritischen Stellen Verstärkungen aufweisen. Diese Verstärkungen bestehen aus rippenartigen Erhebungen 31, 33, 35, 37, 39, 41, welche in Längsrichtung des Reluktanzmotors 43 und mittig zu den Statorpolen 45, 46, 47, 48, 49, 50 angeordnet sind. Das Statorjoch 30 besteht aus zusammengefügten Statorblechen, welche eine eckige Außenkontur mit einer der Statorpole 45, 46, 47, 48, 49, 50 entsprechenden geraden Anzahl von Ecken aufweisen. Hierbei verlaufen die Verbindungslinien 51 zwischen zwei jeweils einander gegenüberliegenden Ecken 53, 55 mittig durch die Aussparungen 57, 59 zwischen zwei benachbarten Statorpolen 49/50, 47/48. Die übrigen Ecken an der Außenkontur 29 des Statorjoches 30 sind entsprechend angeordnet.

In vorteilhafter Ausgestaltung weisen die unteren Ecken 69 in den U-förmig ausgebildeten Aussparungen 57, 59, 61, 63, 65, 67 zwischen den Statorpolen 46, 47, 48, 49, 50 jeweils eine abgerundete Form auf. Hierdurch werden die Trägheitsmomente ebenfalls erhöht, was sich positiv in der Reduzierung der Drehmomentschwankungen und der Geräusche auswirkt. Durch die Verstärkungen an der Außenkontur des Statorjoches 3 und den Abrundungen in den Aussparungen wird das Widerstandsmoment an den auf Biegung beanspruchten Stellen des Statorjoches 3 derart vergrößert, daß keine störenden Verformungen mehr auftreten. Hierdurch wird mit einfachen Mitteln ein geräuscharmer Reluktanzmotor mit einer egalisierten Drehmomentabgabe geschaffen.

In der Figur 3 ist die durch die Verformungen bedingte Ellipsenbildung pro Umdrehung des Rotors 11 dargestellt. Für diese umlaufende elliptische Verformung gilt $f = 4f_n \times K$, wobei die erregende Frequenz $f$ der 4fachen Umdrehungsfrequenz $f_n$ und einem Vielfachen $K = 1....3$ davon entspricht.

**Patentansprüche**

1. Reluktanzmotor, insbesondere geschalteter Reluktanzmotor für einen Positionierbetrieb, dessen Stator und Rotor ausgeprägte, lamellierte Stator- und Rotorpole aufweisen, **dadurch gekennzeichnet,** daß die Außenkontur (29) des Statorjoches (30) an den durch die elektromagnetischen Kräfte zwischen den Rotorpolen (13, 14, 15, 16) des Rotors (11) und den erregten Statorpolen (45, 46, 47, 48, 49, 50) beaufschlagten biegekritischen Stellen Verstärkungen aufweist.

2. Reluktanzmotor nach Anspruch 1, **dadurch gekennzeichnet,** daß die Verstärkungen aus rippenartigen Erhebungen (31, 33, 35, 37, 39, 41) bestehen, welche in Längsrichtung des Reluktanzmotors (43) und mittig zu den Statorpolen (44, 45, 46, 47, 48, 49, 50) angeordnet sind.

3. Reluktanzmotor nach Anspruch 2, **dadurch gekennzeichnet,** daß das Statorjoch (30) aus zusammengefügten Statorflächen besteht, welche eine eckige Außenkontur mit einer der Statorpole (45, 46, 47, 48, 49, 50) entsprechenden geraden Anzahl von die Erhebungen bildenden Ecken aufweisen.

4. Reluktanzmotor nach Anspruch 3, **dadurch gekennzeichnet,** daß die Verbindungslinien (51) zwischen zwei jeweils einander gegenüberliegenden Ecken (53, 55) mittig durch die Aussparungen (57, 59) zwischen zwei benachbarten Statorpolen (45/50, 47/48) verlaufen.

5. Reluktanzmotor nach Anspruch 4, **dadurch gekennzeichnet,** daß die unteren Ecken (69) in den U-förmig ausgebildeten Aussparungen

(57, 59, 61, 63, 65, 67) zwischen den Statorpolen (46, 47, 48, 49, 50) eine abgerundete Form aufweisen.

FIG.1

FIG.2

FIG.3